# EUROPÄISCHE PATENTANMELDUNG

(11) **EP 2 799 191 A1**
(43) Veröffentlichungstag der Anmeldung: **05.11.2014**
(21) Anmeldenummer: 14001272.5
(22) Anmeldetag: 07.04.2014
(51) Int. Cl.: B25J 11/00, B25J 15/00

(54) **Greifereinheit zum Ergreifen von mehreren Lebensmittelportionen**

(30) Priorität: 19.04.2013 DE 102013006850
(71) Anmelder: Weber Maschinenbau GmbH Breidenbach, 35236 Breidenbach (DE)
(72) Erfinder: Terruli, David, 35037 Marburg (DE)
(74) Vertreter: Grünecker, Kinkeldey, Stockmair & Schwanhäusser

(57) **Zusammenfassung**

Die Erfindung betrifft eine Greifereinheit (1) zum Ergreifen von mehreren Gegenständen, wobei die Greifereinheit (1) über eine Greifermontageplatte (2) an einem Roboter (3) befestigbar ist, und wobei die Greifereinheit (1) zwei Greifer (5, 6) aufweist. Bei den Gegen-ständen handelt es sich um Lebensmittelportionen (7), und die Greifer (5, 6) sind beidseitig eines Schwenklagers (9) angeordnet, wobei wenigstens ein Greifer (5, 6) an einem im Schwenklager (9) gelagerten Hebelarm (8) angeordnet ist. Die Erfindung betrifft weiterhin ein Verfahren zur Handhabung von Lebensmittelprodukten (7), mit den folgenden Schritten: Ausrichten einer Robotergreifereinheit (1) mit einem ersten Greifer (5) und einem zweiten Greifer (6), so dass der erste Greifer (5) zur Aufnahme einer ersten Lebensmittelportion (7) ausgerichtet ist; Verdrehen des zweiten Greifers (6) bezüglich der Robotergreifereinheit (1), sodass der zweite Greifer (6) zu einer zweiten Lebensmittelportion (7) ausgerichtet ist; Absenken der einzelnen Greifer (5,6), gleichzeitig oder nacheinander; Ergreifen der Lebensmittelportionen (7) mit den Greifern (5, 6); und Anheben der Lebensmittelportionen (7).

## Beschreibung

Die vorliegende Erfindung bezieht sich auf eine Greifereinheit zum Ergreifen von mehreren Gegenständen, wobei die Greifereinheit über eine Greifermontageplatte an einem Roboter befestigbar ist, und wobei die Greifereinheit wenigstens zwei Greifer aufweist.

Derartige Mehrfachgreifer sind aus dem Stand der Technik bekannt, wobei es insbesondere bekannt ist, dass mehrere Greifer, die an einer gemeinsamen Greifergrundstruktur befestigt sind, bezüglich der Greifergrundstruktur in der Höhenrichtung verfahren werden können und um die Höhenrichtung verdreht werden können.

Es ist die Aufgabe der Erfindung, eine Greifereinheit und ein Verfahren zur Handhabung von Lebensmittelportionen bereitzustellen, die in einfacher Art und Weise ermöglichen, mehrere Lebensmittelportionen, die in unterschiedlichen Orientierungen auf einem Förderband oder einer Ablage angeordnet sind, effizient aufzunehmen.

Erfindungsgemäß wird dafür eine Greifereinheit zum Ergreifen von mehreren Lebensmittelportionen bereitgestellt, wobei die Greifereinheit über eine Greifermontageplatte, an einem Roboter befestigbar ist, wobei die Greifereinheit wenigstens zwei Greifer aufweist, die beidseitig eines Schwenklagers angeordnet sind, und wobei wenigstens ein Greifer an einem im Schwenklager gelagerten Hebelarm angeordnet ist. Dies ermöglicht eine einfache und zügige Höhenverstellung wenigstens eines Greifers, so dass eine Aufnahme von mehreren Lebensmittelportionen mit der Greifereinheit möglich ist, wobei die Höhenverstellung zumindest eines Greifers bei der Aufnahme nicht durch den Roboter erfolgen muss. Durch die relative Höhenverstellung der Greifer wird insbesondere ein sequentielles Aufnehmen von mehreren Lebensmittelportionen ermöglicht. Der Hebelarm ist dafür insbesondere um eine horizontale Achse verschwenkbar.

Bei den Lebensmittelportionen handelt es sich insbesondere um Stapel von aufgeschnittenen Käse-, Wurst- oder Schinkenscheiben. Weiterhin können die Lebensmittelportionen auch Käse, Wurst oder Schinken am Stück sein. Natürlich ist die Erfindung auch auf beliebige andere Lebensmittelportionen anwendbar, beispielsweise auf Brotstücke oder - scheiben und Ähnliches.

In einer vorteilhaften Ausführungsform ist wenigstens ein Greifer unabhängig von dem wenigstens einem anderen Greifer verdrehbar. Dies ermöglicht, dass der verdrehbare Greifer bezüglich einer Lebensmittelportion ausgerichtet werden kann. Der andere Greifer kann insbesondere durch Verdrehen der gesamten Greifereinheit ausgerichtet werden. Somit können mehrere unterschiedlich ausgerichtete Lebensmittelportionen mit nur einer Greifereinheit aufgenommen werden. Zudem kann die Orientierung der Lebensmittelportion, die mit dem Greifer aufgenommen wurde, während des Handhabungsvorgangs verändert werden, sodass die Lebensmittelportion in einer gewünschten Orientierung, insbesondere bezüglich der anderen zeitgleich gehandhabten Lebensmittelportion abgelegt werden kann.

Bei mehr als zwei Greifern an einer Greifereinheit können insbesondere alle Greifer bis auf einen Greifer verdrehbar sein, wobei der nicht verdrehbare Greifer dadurch bezüglich seiner Lebensmittelportion ausgerichtet wird, dass die Greifereinheit als Ganzes durch den Roboter verdreht wird. Somit kann ein Greiferdrehantrieb eingespart werden.

In manchen Ausführungsformen sind beide Greifer beziehungsweise alle Greifer verdrehbar. Somit können die Greifer jeweils so bezüglich der Greifermontageplatte verdreht werden, dass ihre Ausrichtung der Ausrichtung der jeweiligen, aufzunehmenden Lebensmittelportionen entspricht.

Insbesondere sind die oder der Greifer bezüglich des im Schwenklager gelagerten Hebelarms verdrehbar, an dem sie befestigt sind.

In einer Ausführungsform ist wenigstens ein Greifer unabhängig von dem anderen Greifer translatorisch bezüglich der Greifermontageplatte verfahrbar. Insbesondere ist der Greifer translatorisch entlang des Hebelarms verfahrbar. In manchen Ausführungsformen ist der Greifer horizontal bezüglich der Greifermontageplatte verfahrbar. Weiterhin kann der Greifer mitsamt dem Hebelarm verfahren oder verschwenkt werden und somit translatorisch bezüglich der Greifermontageplatte verfahren werden. Die Verfahrbarkeit des Greifers bezüglich der Greifermontageplatte ermöglicht, dass ohne Bewegung der gesamten Greifereinheit durch den Roboter eine Positionierung des Greifers bezüglich einer Lebensmittelportion erfolgen kann. Dies kann dem Zwecke dienen, dass eine Feineinstellung der Positionierung durch Verfahren des Greifers nach einer groben Positionierung der Greifereinheit durch den Roboter erfolgen kann. Zudem kann die Verfahrbarkeit des Greifers auch ermöglichen, dass die Greifer einer Greifereinheit einzeln und relativ zueinander so positioniert werden können, dass jeder Greifer über der von ihm aufzunehmenden Lebensmittelportion positioniert werden kann.

Vorteilhafterweise ist eine Kamera vorgesehen, um die Position von verschiedenen Lebensmittelportionen zu erfassen, wobei eine Steuereinheit ausgelegt ist, die Greifer entsprechend der von der Kamera ermittelten Informationen auszurichten. Die Kamera kann an der Greifereinheit oder separat von der Greifereinheit angeordnet sein. Durch einen Bilderfassungsalgorithmus wird die Position und vorteilhafterweise auch Ausrichtung der verschiedenen Lebensmittelportionen erfasst, und diese Informationen an die Steuereinheit weitergegeben, die dann die Antriebe der Greifereinheit entsprechend ansteuert.

In bevorzugten Ausführungsformen sind die Greifer ausgelegt, die Lebensmittelportionen zu untergreifen. Dafür können insbesondere Greifer eingesetzt werden, die beidseitige Greiferschaufeln aufweisen, die unter die Lebensmittelportionen geschoben werden können.

Alternativ ist es aber auch möglich, dass die Greifer die Lebensmittelportionen lediglich von oben ergreifen, beispielsweise wenn die Greifer als Sauggreifer ausgeführt sind. Weiterhin ist es möglich, dass die Greifer die Lebensmittelportionen von der Seite ergreifen, beispielsweise indem sie einen Eingriff mittels Reibschluss oder Formschluss durch seitliche Backen beziehungsweise Haken erzeugen.

In einer Ausführungsform der Greifereinheit sind die beiden Greifer an dem im Schwenklager gelagerten Hebelarm beidseitig des Schwenklagers angeordnet. Die Anordnung von mehreren Greifer an einem Hebelarm ermöglicht, dass die vertikale Position von mehreren Greifern mit nur einem Antrieb verstellt werden kann. Insbesondere ist es vorteilhaft, wenn die Greifer beidseitig des Schwenklagers angeordnet sind, da dann gleichzeitig ein Greifer nach unten, und der andere Greifer nach oben verfahren werden kann, das heißt, die Greifer können in gegensätzliche Richtungen mit nur einem Antrieb verfahren werden. In einer anderen Ausführungsform der Greifereinheit, ist nur ein Greifer an dem im Schwenklager gelagerten Hebelarm angeordnet. Die Anordnung des wenigstens einen Greifers an einem separaten Hebelarm ermöglicht, dass der Greifer unabhängig von dem anderen Greifer in der Höhe verstellt werden kann.

Die Höhenverstellung der Greifer ermöglicht, dass Lebensmittelportionen nacheinander mit nur einer Greifereinheit aufgenommen werden können. Dabei kann die Greifereinheit als Ganzes bewegt werden oder stillstehen.

Wenn mehrere Greifer, insbesondere zwei Greifer, höhenverstellbar an der Greifereinheit befestigt sind, kann beispielsweise ein Greifer bereits beim Anfahren der Greifereinheit zu einer ersten Lebensmittelportion abgesenkt werden, so dass zunächst mit diesem Greifer die erste Lebensmittelportion ergriffen werden kann. Dann wird dieser Greifer einzeln oder zusammen mit der Greifereinheit angehoben, und ein zweiter Greifer einzeln oder zusammen mit der Greifereinheit zu einer zweiten Lebensmittelportion abgesenkt und gegebenenfalls orientiert, und dann wird die zweite Lebensmittelportion durch den zweiten Greifer ergriffen.

Die Erfindung stellt weiterhin einen Roboter zur Handhabung von Lebensmittelprodukten bereit, mit einem beweglichen Roboterarm, an dem wenigstens eine Greifereinheit nach einem der vorangehenden Ansprüche befestigt ist.

Vorteilhafterweise ist der Roboter ein Delta-Roboter. Der Roboter umfasst somit eine Roboterbasis und eine Werkzeugbefestigung, wobei die Roboterbasis und die Werkzeugbefestigung durch wenigstens drei Kombinationen aus einem oberen Roboterarm und einem unteren Roboterarm verbunden sind, wobei in jeder der Kombinationen der obere Roboterarm und der untere Roboterarm schwenkbar miteinander verbunden sind. Diese sogenannte Delta-Kinematik ermöglicht insbesondere eine schnelle seitliche Versetzung der Werkzeugbefestigung, wodurch in Pick-and-Place-Anwendungen für Lebensmittelportionen ein schnelles seitliches Versetzen der Lebensmittelportionen ermöglicht wird. Die Greifermontageplatte der Greifereinheit wird an der Werkzeugbefestigung des Roboters befestigt. Alternativ kann der Roboter auch ein Portalroboter sein.

Die Erfindung stellt weiterhin ein Verfahren zur Handhabung von Lebensmittelprodukten bereit, das die folgenden Schritte umfasst: Zunächst wird eine Robotergreifereinheit mit einem ersten Greifer und einem zweiten Greifer ausgerichtet, so dass der erste Greifer zur Aufnahme einer ersten Lebensmittelportion ausgerichtet ist. Dann wird ein zweiter Greifer bezüglich der Robotergreifereinheit verdreht, so dass der zweite Greifer zu einer zweiten Lebensmittelportion ausgerichtet ist. Dann werden die Greifer abgesenkt und die Lebensmittelportionen werden sequentiell oder gleichzeitig mit den Greifern ergriffen. Schließlich werden die Lebensmittelportionen angehoben, insbesondere durch Anheben der gesamten Robotergreifereinheit. Die Greifer können insbesondere einzeln und sequentiell bezüglich der Robotergreifereinheit abgesenkt werden. Alternativ können alle Greifer gleichzeitig bezüglich der Robotergreifereinheit abgesenkt werden. Zudem ist es möglich, dass sequentiell Untergruppen von einem oder mehreren Greifern gleichzeitig bezüglich der Robotergreifereinheit abgesenkt werden. Während des Absenkens der Greifer bleibt die verbleibende Robotergreifereinheit vorteilhafterweise zumindest in ihrer Höhenposition unverändert. Dabei kann allerdings eine horizontale Bewegung der Robotergreifereinheit vorgesehen sein, insbesondere, wenn die relativen Abstände der zu ergreifenden Lebensmittelportionen nicht den relativen Abständen der Greifer an der Robotergreifereinheit entsprechen. Somit können die jeweiligen Greifer jeweils durch eine horizontale Bewegung der Robotergreifereinheit bezüglich der sequentiell aufzunehmenden Lebensmittelportionen ausgerichtet werden. Dafür kann zusätzlich oder alternativ auch eine Verdrehbewegung der Robotergreifereinheit um die Hochachse vorgesehen sein.

In manchen Ausführungsformen ist es möglich, dass die Greifer nur durch Absenken der Robotergreifereinheit abgesenkt werden.

Vorteilhafterweise werden die erste und zweite Lebensmittelportion im Wesentlichen gleichzeitig von dem ersten und zweiten Greifer ergriffen. Dazu werden die ersten und zweiten Greifer zueinander verdreht, translatorisch verfahren und/oder höhenverstellt, so dass die jeweiligen Greifer bei den jeweiligen Lebensmittelportionen angeordnet sind und entsprechend den jeweiligen Lebensmittelportion ausgerichtet sind.

Insbesondere wird gleichzeitig mit dem Verdrehen des zweiten Greifers oder im Anschluss oder vor Verdrehen des zweiten Greifers, der zweite Greifer bezüglich des ersten Greifers translatorisch verfahren.

Nach dem Anheben der Lebensmittelportionen können die Lebensmittelportionen durch Verdrehen des zweiten Greifers zueinander ausgerichtet werden. Weiterhin können die Lebensmittelportionen durch translatorisches Verfahren, Höhenverstellen oder Verdrehen der Greifer zueinander positioniert und ausgerichtet werden. Damit können die Lebensmittelportionen zueinander in eine Lage und Orientierung gebracht werden, die die weitere Verarbeitung vereinfacht, insbesondere dadurch dass alle Lebensmittelportionen gleich ausgerichtet werden und in gewünschten Abständen, insbesondere gleichmäßigen Abständen, für den nachfolgenden Verpackungsprozess angeordnet werden.

Vorteilhafterweise kann das Ausrichten der Robotergreifereinheit und das Verdrehen der Greifer auf dem Leerweg zu den neuen Lebensmittelportionen ausgeführt werden. Dies kann insbesondere anhand von Informationen erfolgen, die von einer Kamera ermittelt werden, die die Ausrichtung der Lebensmittelportionen erfasst. Die Kamera kann an der Robotergreifereinheit befestigt sein und sich mit dieser bewegen, oder aber auch stationär am Gestell des Roboters oder davon abgesetzt angeordnet sein.

Die Erfindung wird im Folgenden anhand von beispielhaften Ausführungsformen, die in den Folgenden Figuren dargestellt sind, weitergehend erläutert.
- Figur 1: zeigt eine Seitenansicht einer Greifereinheit gemäß einer Ausführungsform der Erfindung, die an einem Roboter befestigt ist,
- Figur 2: zeigt eine Draufsicht der Ausführungsform gemäß Figur 1,
- Figur 3: zeigt eine Seitenansicht einer Greifereinheit gemäß einer weiteren Ausführungsform der Erfindung, die ebenfalls an einem Roboter befestigt ist.

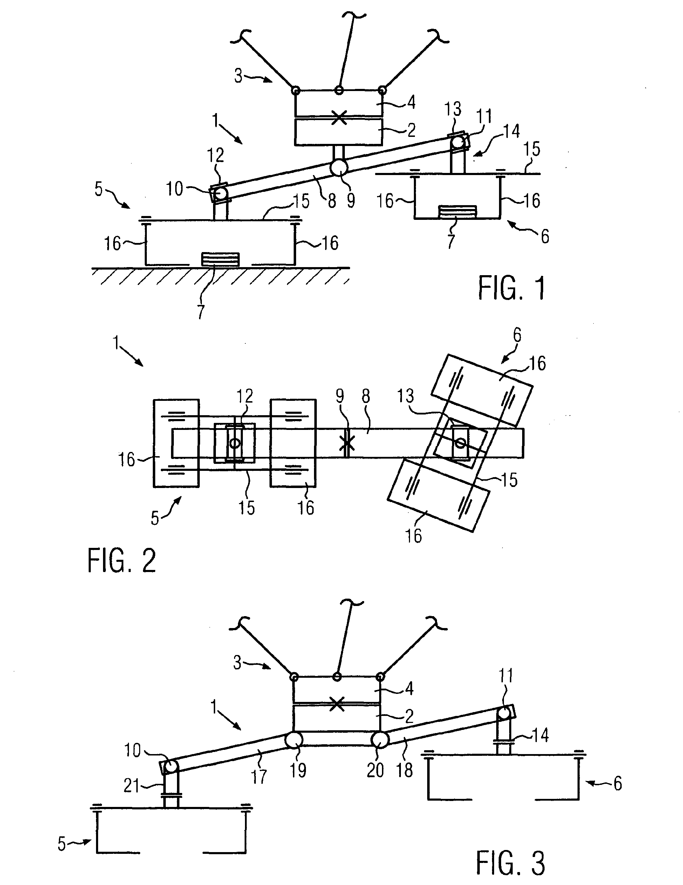

In Figur 1 ist eine erste Ausführungsform einer erfindungsgemäßen Greifereinheit 1 dargestellt, die über eine Greifermontageplatte 2 an einem Roboter 3 befestigbar ist. Die Greifermontageplatte 2 ist ein beliebig gestaltetes Element, das eine Montage an einer Werkzeugbefestigung 4 des Roboters ermöglicht, beispielsweise durch Verschrauben, durch ein Spannelement, durch Einschieben in eine Schienenaufnahme oder Ähnliches.

Die Greifereinheit weist einen ersten Greifer 5 und einen zweiten Greifer 6 auf, die jeweils zum Ergreifen von Lebensmittelportionen 7 ausgestaltet sind. Die Greifer 5, 6 sind an einen Hebelarm 8 angebracht, der in einem im Wesentlichen mittigen Schwenklager 9 verschwenkbar gelagert ist. Die Schwenkachse des Schwenklagers 9 ist im Wesentlichen in horizontaler Richtung. Das Schwenklager 9 ist an der Greifermontageplatte 2 befestigt. Die Greifer 5, 6 sind jeweils über Schwenklager 10, 11 am Hebelarm 8 befestigt, so dass die Orientierung der Greifer im Wesentlichen beibehalten werden kann, wenn der Hebelarm 8 verschwenkt wird. Dafür können die Schwenklager 10, 11 insbesondere freiläufig ausgestaltet sein, so dass die Ausrichtung der Greifer 5, 6 lediglich durch die wirkende Schwerkraft erfolgt. In anderen Ausführungsformen kann aber auch eine Kopplung der Rotationsbewegung im Schwenklager 9 mit der Rotationsbewegung in den Schwenklagern 10, 11 durch ein entsprechendes Kopplungselement erfolgen, so dass die Greifer 5, 6 in der jeweils gewünschten Richtung ausgerichtet werden können, das heißt insbesondere in der gezeigten horizontalen Ausrichtung verbleiben können. Die Kopplung kann dadurch erfolgen, dass ein Servoantrieb in den Schwenklagern 10, 11 vorgesehen ist, der mit der Steuerung des Antriebs des Schwenklagers 9 synchronisiert ist oder dadurch, dass eine Steuereinheit über einen Sensor die Ist-Lage der Greifer 5, 6 erfasst und die den Schwenklagern 10, 11 zugeordneten Servomotoren entsprechend ansteuert, um die gewünschte Ausrichtung der Greifer 5, 6 zu erreichen. Weiterhin kann das Kopplungselement auch eine Ketten-, Band- oder Zahnradverbindung der Schwenklager 10, 11 mit dem Schwenklager 9 sein.

Weiterhin kann in manchen Ausführungsformen zumindest ein Greifer 5, 6 translatorisch bezüglich des Hebelarms 8 verschieblich sein. Dafür kann eine Schiebehülse 12, 13 auf dem Hebelarm 8 angebracht sein, die auf dem Hebelarm 8 entlang dessen Erstreckung verschieblich ist, und an der das entsprechende Schwenklager 10, 11 des Greifers 5, 6 angebracht ist. Für die Verschiebung der jeweiligen Schiebehülse 12, 13 ist ein Antrieb vorgesehen, der durch die Steuereinheit gesteuert wird. Dieser Antrieb kann ein Linearmotor oder Servoantrieb sein, und direkt an der Schiebehülse 12, 13 oder beabstandet davon, gekoppelt durch ein Band beziehungsweise eine Kette, angeordnet sein.

Wie in Figur 1 dargestellt ist, weist der Greifer 6 in seinem oberen Bereich eine Drehlagerung 14 auf, die eine Verdrehung des Greifers 6 unabhängig von dem Hebelarm oder dem Greifer 5 ermöglicht. Insbesondere ermöglicht die Drehlagerung 14 eine Verdrehung um die Hochachse. Somit kann der Greifer 6 bezüglich der von ihm zu ergreifenden Lebensmittelportion 7 ausgerichtet werden, beziehungsweise kann eine ergriffene Lebensmittelportion 7 so verdrehen, dass diese in die gewünschte Ausrichtung für ihre Ablage gebracht wird. Der Greifer 5 weist in der vorliegenden Ausführungsform keine Drehlagerung auf. Eine Verdrehung des Greifers 5 erfolgt durch Verdrehung der gesamten Greifereinheit 1 durch den Roboter 3. Alternativ kann aber auch der Hebelarm 8 als Ganzes bezüglich der Greifermontageplatte 2 verdrehbar sein, oder kann der Greifer 5 eine Drehlagerung aufweisen, die der Drehlagerung 14 des Greifers 6 entspricht.

In Figur 2 ist eine Draufsicht der Greifereinheit aus Figur 1 gezeigt, wobei hier deutlich gesehen werden kann, wie der Greifer 6 gegenüber dem Greifer 5 verdreht ist. Weiterhin sind in Figur 2 die beiden Greifer 5, 6 mittels der Schiebehülsen 12, 13 jeweils in Richtung des Schwenklagers 9 des Hebelarms 8 verschoben.

Die Greifer 5, 6 weisen jeweils eine Grundstruktur 15 auf, die über die optional vorhandene Drehlagerung 14 und das Schwenklager 10, 11 an der Schiebehülse 12, 13 gelagert ist. Auf der Grundstruktur 15 sind beidseitig Greiferschaufeln 16 vorgesehen, die ausgelegt sind, die Lebensmittelportionen 7 zu untergreifen. In anderen Ausführungsformen kann auch nur einseitig eine Greiferschaufel 16 vorgesehen sein. In der vorliegenden Ausführungsform sind die Greiferschaufeln linear auf der Grundstruktur 15 in im Wesentlichen horizontaler Richtung verschieblich. In anderen Ausführungsformen können die Greiferschaufeln auch verschwenkbar bezüglich der Grundstruktur 15 gelagert sein.

Im erfindungsgemäßen Verfahren wird die Greifereinheit 1 durch den Roboter 3, der insbesondere ein Delta-Roboter ist, verfahren und im Wesentlichen über zu ergreifenden Lebensmittelprodukten positioniert. Dabei wird der Greifer 5 zusammen mit der gesamten Greifereinheit 1 entsprechend einer Lebensmittelportion 7 ausgerichtet. Weiterhin wird der zweite Greifer 6 durch die Drehlagerung 14 so verdreht, dass er bezüglich einer zweiten Lebensmittelportion 7 ausgerichtet ist. Die Lebensmittelportionen 7 werden dann durch Absenken der jeweiligen Greifer mittels Verschwenken des Hebelarms 8 nacheinander abgesenkt, so dass die Lebensmittelportionen 7 ergriffen werden können. Dann werden die Lebensmittelportionen durch Verfahren des Roboters 3 zu einem gewünschten Ort verlagert.

In manchen Ausführungsformen kann der Hebelarm 8 auch so ausgerichtet werden, dass durch Absenken der gesamten Robotergreifereinheit 1 beide Lebensmittelportionen zeitgleich erfasst werden können. In diesen Ausführungsformen ist es prinzipiell nicht notwendig, dass ein Hebelarm 8 vorgesehen ist. Dennoch kann das Vorsehen eines Hebelarms 8 vorteilhaft sein, insbesondere wenn die Lebensmittelportionen 7 auf einer Ablage vorgesehen sind oder auf einer Ablage ablegt werden sollen, die unterschiedlich hohe Abschnitte hat.

In Figur 3 ist eine zweite Ausführungsform einer erfindungsgemäßen Greifereinheit 1, die wiederum an einem Roboter 3 befestigt ist, dargestellt.

Im Gegensatz zur ersten Ausführungsform gemäß Figur 1 ist für den Greifer 5 und für den Greifer 6 in Figur 3 jeweils ein separater Hebelarm 17, 18 vorgesehen. Die Hebelarme 17, 18 sind jeweils bezüglich der Greifermontageplatte 2 in einem Schwenklager 19, 20 gelagert. Am gegenüberliegenden Ende der Hebelarme 17, 18 ausgehend von den Schwenklagern 19, 20 ist jeweils ein weiteres Schwenklager 10, 11 vorgesehen, das zur Lagerung der Greifer 5, 6 dient. In Figur 3 sind weiterhin beide Greifer 5, 6 jeweils mit einer Drehlagerung 14, 21 versehen. Somit können gemäß der Ausführungsform in Figur 3 die Greifer 5, 6 unabhängig bezüglich der Greifermontageplatte 2 und somit ohne Verfahren des Roboters 3 vertikal verfahren werden, nämlich durch Verschwenken des jeweiligen Hebelarms 17, 18, und verdreht werden, nämlich durch Verdrehen der jeweiligen Drehlagerung 14,21.

Der Höhenausgleich durch den erfindungsgemäßen Hebelarm ermöglicht jeweils, dass bei der Aufnahme einer Portion durch einen der Greifer ein Aufsetzen des anderen Greifers auf eine naheliegende Portion vermieden werden kann.

Dabei kann das Ausrichten der Greifer zu den aufzunehmenden Lebensmittelportionen wie folgt erreicht werden.

In einer Ausführungsform können beide Greifer zueinander fest am Roboter montiert sein, wobei bei der Aufnahme der ersten Lebensmittelportion der Roboter den ersten Greifer zur Lebensmittelportion hin ausrichtet. Dann wird der Greifer durch Verschwenken des Hebelarms abgesenkt, die Lebensmittelportionen durch den Greifer aufgenommen und der Greifer durch Verschwenken des Hebelarms wieder angehoben. Zur Aufnahme der zweiten Lebensmittelportion fährt der Roboter dann über die nachfolgend aufzunehmende Lebensmittelportion in eine zweite Position in der der zweite Greifer über der nachfolgend aufzunehmenden Lebensmittelportion angeordnet ist. Dann wird der zweite Greifer wiederum durch Verschwenken des Hebelarms abgesenkt und die Lebensmittelportion aufgenommen.

Der im Schwenklager gelagerte Hebelarm bildet einen Höhenausgleich, der wechselnd tätig werden kann, wenn die jeweiligen Greifer zu den jeweiligen Lebensmittelportionen ausgerichtet sind. Dabei muss der Höhenausgleich mindestens um den Betrag der Lebensmittelportionshöhe und einen zusätzlich definierten Sicherheitsabstand verfahrbar sein. Zur Aufnahme senkt sich die Greifereinheit so weit ab, bis die Schaufelkanten der Greifer ein Eintrageband oder eine Ablage berühren, auf der die Lebensmittelportionen aufliegen, so dass sie die Lebensmittelportionen untergreifen können. Die Ablage der Lebensmittelportionen erfolgt entweder ebenfalls durch Absenken der einzelnen Greifer, oder dadurch, dass der Hebelarm in einer Mittelstellung gehalten wird, in der sich die beiden Greifer vornehmlich auf gleicher Höhe befinden, so dass die Lebensmittelportionen gleichzeitig abgelegt werden können.

In anderen Ausführungsformen ist ein Greifer in seiner horizontalen Lage fest an der Greifereinheit angebunden. Der Roboter richtet die Greifereinheit so aus, dass der erste Greifer zur aufzunehmenden Lebensmittelportion ausgerichtet ist. Der zweite Greifer ist zum ersten Greifer durch relative Bewegung positionierbar und wird durch Bewegung des zweiten Greifers bezüglich der Greifereinheit und durch Verdrehen des zweiten Greifers bezüglich einer zweiten Lebensmittelportion ausgerichtet. Dann kann durch eine einzige Absenkbewegung des Roboters ein Aufnehmen beider Lebensmittelportionen durch die beiden Greifer erfolgen.

Insbesondere können die durch die Greifer der Greifereinheit gehaltenen Lebensmittelportionen bereits in der Greifereinheit durch Verfahren der Greifer zueinander auf einen gewünschten Formatsatz ausgerichtet werden, und damit in der gewünschten Beabstandung und Ausrichtung abgelegt werden, was ein nachfolgendes Verpacken der Lebensmittelportionen erheblich vereinfacht.

Weiterhin kann die Ausrichtung von mehreren Lebensmittelportionen vor der Aufnahme der Lebensmittelportionen durch eine Kamera und entsprechende Bildverarbeitungssoftware erfasst werden, so dass die Steuereinheit des Roboters und der Greifereinheit die notwendige Information erhält, wie die Greifer zueinander auszurichten beziehungsweise zu verfahren sind.

Schließlich wird darauf hingewiesen, dass die Greifereinheit nicht nur zwei Greifer aufweisen kann, sondern je nach Anwendung beliebig viele Greifer, insbesondere drei, vier, fünf, sechs, sieben, acht, neun, zehn oder mehr Greifer.

Die erfindungsgemäßen Greifereinheit und das erfindungsgemäßen Verfahren ermöglichen insbesondere, dass sowohl die Zeit für den Greifvorgang, das heißt das Schließen und Öffnen des Greifers, als auch die Verfahrenszeit des Roboters zwischen verschiedenen Positionen reduziert werden kann, wodurch ein höherer Durchsatz von Lebensmittelportionen ermöglicht wird.

Weiterhin kann durch die Verstellung des Greifers bezüglich der Greifereinheit eine Feineinstellung ermöglicht werden, die in dieser Form oder Geschwindigkeit durch eine Bewegung des Roboters nicht möglich ist.

## Patentansprüche

1. Greifereinheit (1) zum Ergreifen von mehreren Gegenständen, wobei die Greifereinheit (1) über eine Greifermontageplatte (2) an einem Roboter (3) befestigbar ist, und wobei die Greifereinheit (1) zwei Greifer (5, 6) aufweist,
**dadurch gekennzeichnet, dass**
es sich bei den Gegenständen um Lebensmittelportionen (7) handelt, und dass die Greifer (5, 6) beidseitig eines Schwenklagers (9) angeordnet sind, wobei wenigstens ein Greifer (5, 6) an einem im Schwenklager (9) gelagerten Hebelarm (8) angeordnet ist.

2. Greifereinheit nach Anspruch 1, wobei wenigstens ein Greifer (5, 6) unabhängig von dem wenigstens einen anderen Greifer (5, 6) verdrehbar ist,

3. Greifereinheit nach Anspruch 2, wobei beide Greifer (5, 6) verdrehbar sind.

4. Greifereinheit nach einem der vorangehenden Ansprüche, wobei wenigstens ein Greifer (5, 6) unabhängig von dem anderen Greifer (5, 6) translatorisch bezüglich der Greifermontageplatte (2) verfahrbar ist.

5. Greifereinheit nach einem der vorangehenden Ansprüche, wobei eine Kamera vorgesehen ist, um die Position von verschiedenen Lebensmittelportionen (7) zu erfassen, und wobei eine Steuereinheit ausgelegt ist, die Greifer (5, 6) entsprechend der von der Kamera ermittelten Information auszurichten.

6. Greifereinheit nach einem der vorangehenden Ansprüche , wobei die Greifer Sauggreifer sind.

7. Greifereinheit nach einem der vorangehenden Ansprüche, wobei die beiden Greifer (5, 6) an dem im Schwenklager (9) gelagerten Hebelarm (8), beidseitig des Schwenklagers angeordnet sind.

8. Greifereinheit nach einem der Ansprüche 1 bis 6, wobei nur ein Greifer an dem im Schwenklager gelagerten Hebelarm angeordnet ist.

9. Roboter (3) zur Handhabung von Lebensmittelprodukten (7),
mit einem beweglichen Roboterarm, an dem wenigstens eine Greifereinheit (1) nach einem der vorangehenden Ansprüche befestigt ist.

10. Roboter nach Anspruch 9, wobei der Roboter (3) ein Delta-Roboter ist.

11. Verfahren zur Handhabung von Lebensmittelprodukten (7), mit den folgenden Schritten:
i) Ausrichten einer Robotergreifereinheit (1) mit einem ersten Greifer (5) und einem zweiten Greifer (6), so dass der erste Greifer (5) zur Aufnahme einer ersten Lebensmittelportion (7) ausgerichtet ist,
ii) Verdrehen des zweiten Greifers (6) bezüglich der Robotergreifereinheit (1), sodass der zweite Greifer (6) zu einer zweiten Lebensmittelportion (7) ausgerichtet ist,
iii) Absenken der einzelnen Greifer (5,6), gleichzeitig oder nacheinander,
iv) Ergreifen der Lebensmittelportionen (7) mit den Greifern (5, 6), und
v) Anheben der Lebensmittelportionen (7).

12. Verfahren nach Anspruch 11, wobei die erste und zweite Lebensmittelportion (7) im Wesentlichen gleichzeitig von dem ersten und zweiten Greifer (5, 6) ergriffen werden.

13. Verfahren nach Anspruch 11 oder 12, wobei in Schritt ii) zusätzlich der zweite Greifer (5) bezüglich des ersten Greifers (5) translatorisch verfahren wird.

14. Verfahren nach einem der Ansprüche 11 bis 13, wobei nach Schritt v) die Lebensmittelportionen (7) durch Verdrehen des zweiten Greifers (6) zueinander ausgerichtet werden.

15. Verfahren nach einem der Ansprüche 11 bis 14 bei dem die Schritte i) und ii) auf dem Leerweg zu den neuen Lebensmittelportionen (7) ausgeführt werden.
